# EUROPÄISCHE PATENTSCHRIFT

(11) **EP 4 314 750 B1**
(45) Veröffentlichungstag und Bekanntmachung des Hinweises auf die Patenterteilung: **15.04.2026**
(21) Anmeldenummer: 22702998.0
(22) Anmeldetag: 03.02.2022
(51) Int. Cl.: G01M 3/22, G01M 3/20, H01M 10/42, H01M 10/0525

(54) **FUNKTIONSPRÜFUNG EINER LECKDETEKTIONSVORRICHTUNG FÜR DIE DICHTHEITSPRÜFUNG EINES MIT EINER FLÜSSIGKEIT GEFÜLLTEN PRÜFLINGS**
FUNCTIONAL TEST OF A LEAK DETECTION DEVICE FOR THE LEAK TEST OF A TEST OBJECT FILLED WITH A LIQUID
TEST DE FONCTIONNEMENT D'UN DISPOSITIF DE DETECTION DE FUITE POUR LE TEST DE FUITE D'UNE OBJET A TESTER REMPLI D'UN LIQUIDE

(30) Priorität: 22.03.2021 DE 102021107055
(43) Veröffentlichungstag der Anmeldung: 07.02.2024
(73) Patentinhaber: Inficon GmbH, 50968 Köln (DE)
(72) Erfinder: HILGERS, Heike, 50968 Köln (DE)
(74) Vertreter: dompatent
(86) Internationale Anmeldenummer: PCT/EP2022/052537
(87) Internationale Veröffentlichungsnummer: WO 2022/199917

(56) Entgegenhaltungen:
- WO-A1-2021/023513
- CN-A- 109 520 681
- CN-B- 106 289 666
- DE-A1- 102019 121 462
- DE-U1- 202019 005 500
- US-A1- 2017 089 339
- KAMFER G M ET AL: "Dimethyl ether in a state of saturation. Calculation of thermodynamic properties", CHEMISTRY AND TECHNOLOGY OF FUELS AND OILS, KLUWER ACADEMIC PUBLISHERS-PLENUM PUBLISHERS, NE, vol. 41, no. 1, 1 January 2005 (2005-01-01), pages 77 - 83, XP019218916, ISSN: 1573-8310, DOI: 10.1007/S10553-005-0026-3
- KUZ'MIN V V: "PRECISE MEASUREMENTS OF SMALL GAS FLOWS - METROLOGICAL BASIS FOR THE CALIBRATION OF LEAK DETECTORS", MEASUREMENT TECHNIQUES, SPRINGER US, NEW YORK, vol. 40, no. 2, 1 February 1997 (1997-02-01), pages 130 - 134, XP000754715, ISSN: 0543-1972

## Beschreibung

Die Erfindung betrifft eine Vorrichtung und ein Verfahren zur Funktionsprüfung einer Leckdetektionsvorrichtung für die Dichtheitsprüfung eines mit einer Flüssigkeit gefüllten Prüflings.

Es ist bekannt, an einem Prüfling, der mit einer Flüssigkeit gefüllt ist, wie z.B einer Batterie, eine Leckdetektion durchzuführen, um die Dichtheit des Prüflings zu prüfen. Typischerweise steht bei derartigen Prüflingen kein in dem Prüfling vorhandenes Gas als Prüfgas zur Verfügung und der Prüfling kann oder soll auch nicht mit einem separaten Prüfgas aktiv befüllt werden. Dies ist beispielsweise bei Batterien der Fall, die mit Elektrolytflüssigkeiten befüllt sind, wie z.B. eine mit Elektrolyt befüllten Lithium-Ionen-Batterie, wobei das Elektrolyt als wesentliche Komponente das Lösungsmittel Dimethylcarbonat enthält.

Die Leckdetektion solcher Prüflinge basiert auf dem Prinzip, Teile der Flüssigkeit innerhalb des Prüflings, die aus dem Inneren des Prüflings durch ein Leck nach außen strömen, mit Hilfe eines Detektors zu detektieren. Zur Dichtheitsprüfung wird der Prüfling in eine Vakuumkammer eingebracht. Aus dem Prüfling ausgetretene Teile der Flüssigkeit werden mit einem Vakuumsystem von einer Vakuumpumpe kontinuierlich aus der Vakuumkammer heraus gefördert und einem geeigneten Sensor zugeführt.

In der Kälte-/Klima-Industrie ist es bekannt, mit einem flüssigen Kältemittel befüllte Prüflinge - z.B. Wärmetauscher - auf Dichtheit zu prüfen. Bei diesen Prüflingen besteht eine Besonderheit darin, dass das flüssige Kältemittel unter Überdruck in dem Prüfling enthalten ist, um die flüssige Phase des Kältemittels zu erhalten. Zur Dichtheitsprüfung solcher mit flüssigem Kältemittel befüllter Prüflinge wird an den auf Dichtheit zu prüfenden Bereichen des Prüflings eine Schnüffelsonde entlanggeführt, die aus einem Leck in die äußere Atmosphäre austretendes und dabei verdampfendes Kältemittel ansaugt und einem Gasdetektor zuführt. Die Schnüffelsonde saugt Luft aus der Umgebung des Prüflings an und nimmt dabei austretendes Leckagegas auf, das mit einem entsprechenden Sensor selektiv ermittelt und dabei von den angesaugten Luftkomponenten unterschieden wird.

Bei einem mit einer Flüssigkeit gefüllten Prüfling, dessen Innendruck geringer als atmosphärischer Druck in der äußeren Umgebung des Prüflings ist (z.B. ein Innendruck im Bereich von ca. 50-500 mbar), ist das Schnüffellecksuchverfahren nicht anwendbar, weil im Falle eines Lecks kein Leckagegas nach außen dringt. Zum Beispiel dringt bei Batterien, die mit einem flüssigen Elektrolyt mit niedrigem Dampfdruck befüllt sind und in denen Unterdruck herrscht, im Falle einer Undichtigkeit Luft aus der äußeren Prüflingsumgebung ins Innere des Prüflings. Das Leck ist mit Hilfe einer Schnüffelsonde nicht detektierbar.

Mit herkömmlichen Kalibriervorrichtungen oder Testleckvorrichtungen kann die Funktionsfähigkeit einer Leckdetektionsvorrichtung der oben beschriebenen Art nicht überprüft werden. Herkömmliche Testlecks basieren nämlich auf dem Prinzip, die Prüfflüssigkeit in einem Vorratsbehälter aufzubewahren und durch eine Kapillare oder eine Membran aus dem Vorratsbehälter herauszuführen. Bei der vorliegenden Leckdetektionsvorrichtung ist jedoch eine Prüfflüssigkeit mit einem geringen Dampfdruck von weniger als 500 mbar bei Zimmertemperatur zu verwenden. Das Lösungsmittel Ethylen Acetat hat z.B. einen Dampfdruck von 103mbar bei 20°C. Derartige Prüfflüssigkeiten können über eine Druckdifferenz nicht durch eine Kapillare oder eine Membran in ausreichender Menge in das Nachweissystem eingelassen werden.

Vor diesem Hintergrund liegt der Erfindung die Aufgabe zugrunde, eine verbesserte Testleckvorrichtung und ein verbessertes Verfahren zur Funktionsprüfung einer Leckdetektionsvorrichtung für die Dichtheitsprüfung eines mit einer Flüssigkeit gefüllten Prüflings bereitzustellen.

Beispiele für Leckdetektionsvorrichtungen, deren Funktion mit der erfindungsgemäßen Testleckvorrichtung und dem erfindungsgemäßen Verfahren geprüft werden kann, sind angegeben in DE 20 2019 005 500 U1 und DE 10 2019 121 462 A1.

Die erfindungsgemäße Testleckvorrichtung ist definiert durch die Merkmale von Anspruch 1.

Demnach ist ein Vorratsbehälter mit einer Prüfflüssigkeit gefüllt, die bei Zimmertemperatur einen Dampfdruck von weniger als 500 mbar aufweist. Der Vorratsbehälter weist einen Auslass für die Prüfflüssigkeit auf. Die Besonderheit der erfindungsgemäßen Vorrichtung besteht darin, dass eine Pumpe, die dazu ausgebildet ist, die Prüfflüssigkeit aus dem Vorratsbehälter zu fördern, derart mit dem Vorratsbehälter zusammenwirkt, dass die Prüfflüssigkeit von der Pumpe durch den Auslass in flüssiger Form aus dem Vorratsbehälter austritt. Mit Hilfe der Pumpe ist es möglich, auch Flüssigkeiten mit geringem Dampfdruck mit ausreichender Menge pro Fördervorgang in die Leckdetektionsvorrichtung zu geben.

Bei der Pumpe kann es sich beispielsweise um eine Mikrodosierpumpe handeln, die dazu ausgebildet ist, pro Fördervorgang eine Fördermenge von weniger als 100 µl und bevorzugt von weniger als 100 nl der Prüfflüssigkeit aus dem Auslass zu fördern. Die Testleckvorrichtung, die Pumpe und/oder der Auslass können dazu ausgebildet sein, die Prüfflüssigkeit als Sprühnebel aus dem Auslass zu fördern. Die Pumpe kann eine Piezoflüssigkeitsdosiervorrichtung zum Dosieren der pro Fördervorgang von der Pumpe zu verabreichenden Fördermenge aufweisen.

Bei dem Prüfling handelt es sich erfindungsgemäβ um eine Batterie. Bei der Flüssigkeit und innerhalb des Prüflings und/oder bei der Prüfflüssigkeit handelt es sich um ein Elektrolyt oder eine Einzelkomponente eines Elektrolyts.

Das erfindungsgemäße Verfahren ist durch die Merkmale von Anspruch 6 definiert. Demnach wird zunächst die Prüfkammer der Leckdetektionsvorrichtung auf einen Druck gebracht, der geringer ist als atmosphärischer Druck. Anschließend wird eine vorgegebene Menge einer Prüfflüssigkeit in die Prüfkammer verabreicht, die bei Zimmertemperatur einen Dampfdruck von weniger als 500 mbar aufweist. Die verabreichte Menge der Prüfflüssigkeit wird anschließend zu einem Detektor der Leckdetektionsvorrichtung transportiert und von dem Detektor detektiert. Dabei kann die Prüfflüssigkeit dem Detektor in Form von molekularen Teilchen in verdampfter Form zugeführt werden. Die Verdampfung erfolgt typischerweise nach dem Austreten der Prüfflüssigkeit aus dem Auslass der Testleckvorrichtung. Typischerweise verdampft die Prüfflüssigkeit hierbei am Ausgang des Leckkanals oder der Auslasskanäle, der den Auslass aus dem Vorratsbehälter bildet.

Vorzugsweise ist die Pumpe dazu ausgebildet, pro Fördervorgang eine vorgegebene Menge der Prüfflüssigkeit zum Beispiel in Form eines Pumpenhubs aus dem Auslass zu fördern. Dabei sollten pro Fördervorgang weniger als 100 µl und bevorzugt weniger als 100 nl der Prüfflüssigkeit aus dem Auslass gefördert werden. Die Prüfflüssigkeit kann in verdünnter Form vorliegen.

Die Prüfflüssigkeit kann als Sprühnebel aus dem Auslass gefördert werden. Alternativ ist denkbar, dass die Prüfflüssigkeit nach Verlassen des Vorratsbehälters durch den Auslass verdampft und dadurch außerhalb des Vorratsbehälters in gasförmiger Form vorliegt.

Die Pumpe kann zwischen dem Vorratsbehälter und dem Auslass der Testleckvorrichtung angeordnet sein und ist dabei flüssigkeitsleitend mit dem Vorratsbehälter und dem Auslass verbunden.

Es ist denkbar, dass der Prüfkammer von außen kein Trägergas zugeführt wird, das beispielsweise aus einer mit der Prüfkammer verbundenen Trägergasquelle stammt oder aus der Umgebung der Prüfkammer entnommen wird. Dabei resultiert insbesondere kein Gasstrom, der an der Oberfläche des Prüflings entlanggeführt wird. Vielmehr werden die Teile oder Teilchen der Prüfflüssigkeit zusammen mit Restgasbestandteilen aus der Prüfkammer abgesogen und dem Detektor zugeführt. Ein Trägergas ist dabei nicht erforderlich.

Die Prüfkammer kann als starre Prüfkammer mit starr ausgebildeten Wänden ausgebildet sein. Alternativ kann die Prüfkammer auch als Folienkammer ausgebildet sein, die sich dadurch auszeichnet, dass sie mindestens einen flexiblen Wandbereich aufweist, der beim Evakuieren an den Prüfling gesogen wird und das Volumen der Folienkammer reduziert. Zudem bieten Folienkammern insbesondere mit vollständig aus einer flexiblen Folie bestehenden Wänden den Vorteil, dass die an den Prüfling angesogenen Wände den Prüfling stützen, was insbesondere bei einem flexiblen Prüfling von Vorteil ist.

Der Detektor weist einen Sensor auf, der selektiv die zu detektierenden Teile oder Teilchen der Flüssigkeit detektiert und dadurch von anderen Teilen oder Gasen unterscheiden kann. Die Teile der ausgetretenen Flüssigkeit können in flüssiger Form vorliegen und dem Detektor zugeführt werden. Der Detektor muss dabei in der Lage sein, Flüssigkeiten zu analysieren und die in dem Prüfling enthaltene Flüssigkeit selektiv zu detektieren. Die ausgetretene Flüssigkeit und die Prüfflüssigkeit kann beispielsweise in Form eines Nebels oder Aerosols dem Detektor zugeführt werden.

Alternativ kann vorgesehen sein, dass die Flüssigkeit beim Austreten aus einem Leck im Prüfling verdampft und die ausgetretenen Teile der Flüssigkeit in verdampfter Form, das heißt in gasförmiger Phase, dem Detektor zugeführt werden. Der Detektor muss dann als Gasdetektor ausgebildet sein und in der Lage sein, Gase zu analysieren und die Flüssigkeit in dem Prüfling in ihrer gasförmigen Phase selektiv von anderen Gasen zu unterscheiden. Entscheidend ist dabei, dass die in dem Prüfling enthaltene Flüssigkeit den Wechsel von der flüssigen Phase zu ihrer gasförmigen Phase erst beim Verlassen des Prüflings, das heißt außerhalb des Prüflings oder in der Öffnung oder dem Kanal des Lecks ausführt. Es wird also kein in dem Prüfling vorhandenes Gas als Prüfgas verwendet, weil die Flüssigkeit innerhalb des Prüflings in flüssiger Form vorliegt, selbst wenn die Flüssigkeit durch ein Leck austritt und dabei verdampft.

Bei dem Detektor für die zu detektierenden Teile der Flüssigkeit kann es sich um einen Gasdetektor handeln, wie z.B. ein Massenspektrometer, einen Gaschromatographen, einen Infrarot-Strahlungsabsorptionsdetektor oder einen Detektor mit chemischen Sensoren oder Halbleitersensoren.

Vorzugsweise wird der die Teile der Flüssigkeit transportierende Gasstrom dem Detektor erst dann zugeführt, wenn ein Druckgrenzwert in der Prüfkammer bzw. in der Verbindungsleitung zwischen der Prüfkammer und der die Prüfkammer absaugenden Vakuumpumpe erreicht ist. Dieser Druckgrenzwert kann zwischen ca. 2 mbar und 50 mbar betragen und ist vorzugsweise geringer als 20 mbar.

Die Vakuumpumpe, bei der es sich vorzugsweise um eine Membranpumpe handelt, kann über ein Ventil mit der Prüfkammer und/oder mit der die Vakuumpumpe und die Prüfkammer verbindenden Gasleitung verbunden sein. Zu Beginn des Evakuierens der Prüfkammer ist das Ventil geschlossen. Bei Erreichen des Druckgrenzwerts wird das Ventil geöffnet und ein Teilstrom gelangt zu dem Detektor, während der übrige Hauptgasstrom weiterhin mit der Membranpumpe abgesaugt wird. Dabei wird insbesondere in Verbindung mit einer Vakuumpumpe in Form einer Membranpumpe eine Akkumulation der aus einem Leck austretenden Flüssigkeitsteile erreicht, anders als bei einem herkömmlichen Trägergasverfahren. Bei Erreichen des Druckgrenzwerts werden die bis dahin akkumulierten Flüssigkeitsteile dem Detektor zugeführt.

Vorteilhafterweise ist vorgesehen, dass der Prüfling in der Prüfkammer mit einem Spülgas gespült wird, um an dem Prüfling anhaftende Teile der Flüssigkeit zu entfernen, bevor die Funktionsprüfung durchgeführt wird. Vorzugsweise erfolgt das Spülen des Prüflings mit Spülgas bevor die eigentliche Leckdetektion oder die Funktionsprüfung erfolgt, z.B. vor dem Evakuieren der Prüfkammer.

Es ist denkbar, dass ein Akkumulieren der Teile der Prüfflüssigkeit innerhalb der Prüfkammer oder in der Verbindungsleitung während eines Zeitraums erfolgt, bevor die Prüfflüssigkeit dem Detektor zur Analyse zugeführt wird.

Im Folgenden wird anhand der Figuren ein Ausführungsbeispiel der Erfindung näher erläutert. Es zeigen:
- Fig. 1: ein Blockschaltbild eines Ausführungsbeispiels der Leckdetektionsvorrichtung, und
- Fig. 2: ein Blockschaltbild eines Ausführungsbeispiels der Testleckvorrichtung.

Bei dem Ausführungsbeispiel ist ein mit einer Flüssigkeit 12 befüllter Prüfling 14 in einer Prüfkammer 16 enthalten. Bei dem Prüfling 14 handelt es sich um eine Batterie, die mit einem flüssigen Elektrolyt gefüllt ist. Die Prüfkammer 16 ist in den vorliegenden Ausführungsbeispielen eine herkömmliche starre Prüfkammer.

Die Prüfkammer 16 ist mit einem Vakuumanschluss 22 versehen, an den eine Vakuumpumpe 24 angeschlossen ist, mit der die Prüfkammer 16 evakuiert werden kann. Hierzu weist die Vakuumpumpe 24 mindestens eine Vakuumpumpe in Form einer Membranpumpe auf. Die Prüfkammer 16 und die Vakuumpumpe 24 sind durch eine Verbindungsleitung 26 gasleitend miteinander verbunden, sodass die Vakuumpumpe 24 über die Verbindungsleitung 26 Gas aus der Prüfkammer 16 absaugen kann.

An die die Vakuumpumpe 24 mit der Prüfkammer 16 verbindende Verbindungsleitung 26 ist ein Detektor 28 zum Analysieren und Detektieren von Teilen der Flüssigkeit 12 angeschlossen. Der Detektor 28 ist bei beiden Ausführungsbeispielen ein selektiver Gasdetektor, beispielsweise in Form eines Massenspektrometers, dessen Sensor selektiv molekulare Teilchen der Flüssigkeit 12 detektiert und von anderen Gasen unterscheiden kann. Der Detektor 28 ist Bestandteil eines massenspektrometrischen Vakuumsystems 20, das eine Vorvakuumpumpe 19 und eine Hochvakuumpumpe 18 zum Evakuieren des Massenspektrometers 28 aufweist.

Der Detektor 28 ist über eine gasleitende Detektionsleitung 21 mit der Verbindungsleitung 26 gasleitend verbunden. Die Detektionsleitung 21 ist mit einer Drossel 38 zum Drosseln des aus der Verbindungsleitung 26 abgezweigten Gasstroms und mit einem Ventil V2 zum selektiven Verschließen der Detektionsleitung 21 versehen. Zur Messung des Drucks innerhalb der Verbindungsleitung 26 ist diese mit einem Drucksensor 17 gasleitend verbunden.

Aus einem Leck in dem Prüfling 14 treten Teile der Flüssigkeit 12 aus und gelangen in die Prüfkammer 16. Beim Austreten der Flüssigkeit 12 aus dem Prüfling 14 kann diese verdampfen, sodass die ausgetretenen Teile der Flüssigkeit 12 in gasförmiger Form vorliegen können.

Der Detektor 28 wird als Massenspektrometer in dem Vakuumsystem 20 mit einem Druck betrieben, der geringer ist, als der Druck innerhalb der Prüfkammer 16 und geringer als der Druck am Verbindungspunkt 40 zwischen der Verbindungsleitung 26 und der Detektionsleitung 21 ist. Bei der erfindungsgemäß zum Absaugen der Prüfkammer 16 verwendeten Membranpumpe 24 wird innerhalb der Prüfkammer 16 jedoch kein Hochvakuum erzeugt. Vielmehr erzeugt die Membranpumpe 24 einen Druck im Bereich von einigen Millibar. Die Membranpumpe 24 saugt aus der Prüfkammer 16 noch vorhandene Restgasbestandteile ab. Zudem desorbieren bei Erreichen eines Drucks im Bereich von ca. 10 mbar innerhalb der Prüfkammer 16 Gasbestandteile von den Wänden der Prüfkammer, die ebenfalls von der Membranpumpe 24 abgesaugt werden. Diese Gasbestandteile, d.h. Restgasbestandteile aus der Prüfkammer 16 und von deren Wänden desorbierende Gasbestandteile, nehmen Teile der Flüssigkeit 12 auf, die durch ein Leck aus dem Prüfling 14 in die Prüfkammer 16 gelangen. Diese Teile der Flüssigkeit 12 werden dem Detektor 28 zugeführt.

Der Vakuumdruck innerhalb der Prüfkammer 16 liegt nach dem Evakuieren bei einigen Millibar. Die Diffusion der aus dem Prüfling 14 ausgetretenen und verdampften Teile der Flüssigkeit 12 ist bei diesem Druck noch träge. Der Transport der ausgetretenen Teile der Flüssigkeit 12 zum Detektor 28 wird mit den Gasbestandteilen beschleunigt, ohne dass ein Trägergas verwendet und der Prüfkammer 16 von außen zugeführt wird.

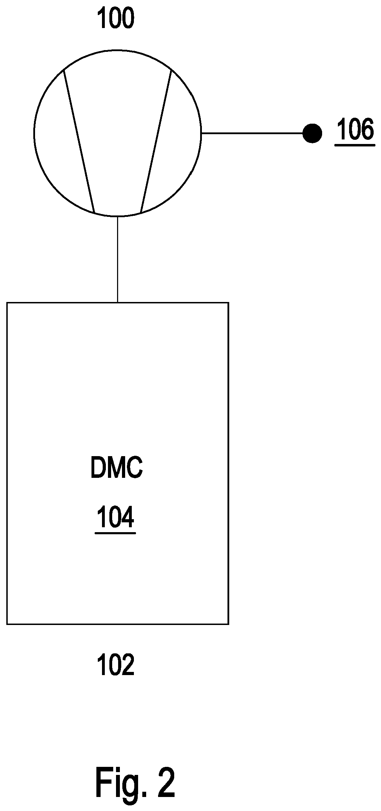

Die Funktionsfähigkeit der Leckdetektionsvorrichtung wird mit der in Fig. 2 dargestellten Testleckvorrichtung geprüft. Hierbei kann auch eine Kalibrierung der Leckdetektionsvorrichtung mit Hilfe der Testleckvorrichtung vorgenommen werden. Die Testleckvorrichtung weist einen Vorratsbehälter 102 auf, der mit einer Prüfflüssigkeit 104 befüllt ist. Bei der Prüfflüssigkeit handelt es sich bei dem vorliegenden Ausführungsbeispiel um das Lösungsmittel Dimethylcarbonat. Eine Pumpe 100 pumpt die Prüfflüssigkeit 104 aus dem Vorratsbehälter 102 zu dem Auslass 106 und aus dem Auslass 106 heraus.

Die Pumpe 100 fördert die Prüfflüssigkeit 104 in flüssiger Form aus dem Auslass 106 heraus. Je nach Druckverhältnissen in der Prüfkammer 16 ist denkbar, dass die aus dem Auslass 106 ausgetretene Prüfflüssigkeit ein Aerosol in Form eines Sprühnebels bildet oder verdampft und in die gasförmige Phase übergeht. Die dabei aus dem Auslass 106 ausgetretenen Teile der Prüfflüssigkeit werden zu dem Detektor 28 transportiert und von diesem analysiert. Dabei wird das gemessene Detektionssignal der bekannten vorgegebenen Menge der Prüfflüssigkeit zugeordnet, im Sinne einer Kalibrierung des Detektors 28.

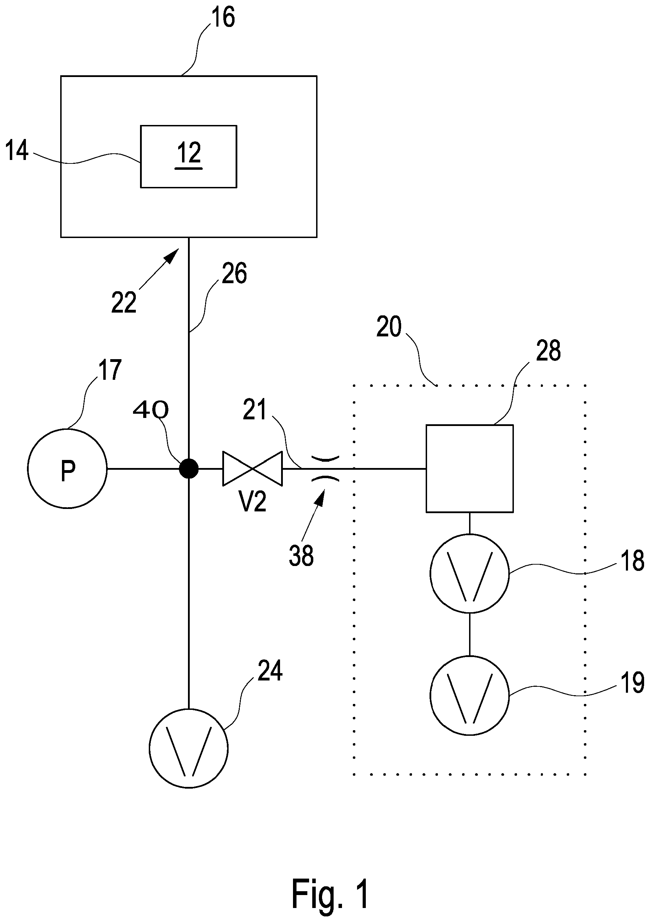

Es ist denkbar, dass eine Akkumulation der aus dem Auslass 106 ausgetretenen Flüssigkeitsteile innerhalb der Prüfkammer 16 oder innerhalb der Verbindungsleitung 26 erfolgt, bevor die ausgetretenen Teile der Prüfflüssigkeit 104 dem Detektor 20 zugeführt werden. Hierzu ist denkbar, dass zwischen dem Verbindungspunkt 40 und der Membranpumpe 24 ein in Fig. 1 nicht dargestelltes Ventil vorgesehen ist, das bei Erreichen eines ausreichenden Vakuumdrucks innerhalb der Prüfkammer 16 geschlossen wird, um eine Akkumulation der ausgetretenen Flüssigkeitsteile innerhalb der Prüfkammer 16 oder in der Verbindungsleitung 26 zwischen der Prüfkammer 16 und dem nicht dargestellten Ventil zu bewirken, bevor die Detektion erfolgt. Zur Detektion kann das Ventil V2 geöffnet werden. Während der Akkumulationsphase kann das Ventil V2 geschlossen oder geöffnet sein.

## Patentansprüche

1. Testleckvorrichtung zur Funktionsprüfung einer Leckdetektionsvorrichtung für die Dichtheitsprüfung eines mit einer Flüssigkeit (12) gefüllten Prüflings (14), wobei der Prüfling (14) eine Batterie ist, die einen Innendruck aufweist, der geringer als atmosphärischer Druck ist, **dadurch gekennzeichnet dass** die Testleckvorrichtung aufweist:
einem mit einer Prüfflüssigkeit (104) gefüllten Vorratsbehälter (102), wobei die Prüfflüssigkeit (104) bei Zimmertemperatur einen Dampfdruck von weniger als 500 mbar aufweist und der Vorratsbehälter (102) einen Auslass (106) aufweist, wobei die Flüssigkeit (12) ein Elektrolyt oder Lösungsmittel und/ oder die Prüfflüssigkeit (104) ein Elektrolyt oder Lösungsmittel ist, und
einer mit dem Vorratsbehälter (102) zusammenwirkenden Pumpe (100), die dazu ausgebildet ist, die Prüfflüssigkeit (104) aus dem Vorratsbehälter (102) zu fördern, derart dass die Prüfflüssigkeit (104) von der Pumpe (100) durch den Auslass (106) in flüssiger Form aus dem Vorratsbehälter (102) austritt.

2. Testleckvorrichtung nach Anspruch 1, **dadurch gekennzeichnet, dass** es sich bei der Pumpe (100) um eine Mikrodosierpumpe handelt, die dazu ausgebildet ist, pro Fördervorgang eine Fördermenge von weniger als 100 µl und bevorzugt von weniger als 100 nl der Prüfflüssigkeit (104) aus dem Auslass (106) zu fördern.

3. Testleckvorrichtung nach Anspruch 1 oder 2, **dadurch gekennzeichnet, dass** die Testleckvorrichtung, die Pumpe (100) und/oder der Auslass (106) dazu ausgebildet sind, die Prüfflüssigkeit (104) als Sprühnebel aus dem Auslass (106) zu fördern.

4. Testleckvorrichtung nach einem der vorhergehenden Ansprüche, **dadurch gekennzeichnet, dass** die Pumpe (100) eine Piezoflüssigkeitsdosiervorrichtung zum Dosieren der pro Fördervorgang von der Pumpe (100) zu verabreichenden Fördermenge aufweist.

5. Verfahren zur Funktionsprüfung einer Leckdetektionsvorrichtung für die Dichtheitsprüfung eines mit einer Flüssigkeit (12) gefüllten Prüflings (14), wobei der Prüfling (14) eine Batterie ist, die einen Innendruck aufweist, der geringer als atmosphärischer Druck ist,
**dadurch gekennzeichnet dass** das Verfahren die Schritte aufweist:
Evakuieren einer Prüfkammer (16) der Leckdetektionsvorrichtung auf einen Druck, der geringer ist als atmosphärischer Druck,
Verabreichen einer vorgegebenen Menge einer Prüfflüssigkeit (104), die bei Zimmertemperatur einen Dampfdruck von weniger als 500 mbar aufweist, in die Prüfkammer wobei die Flüssigkeit (12) ein Elektrolyt oder Lösungsmittel und/oder die Prüfflüssigkeit (104) ein Elektrolyt oder Lösungsmittel ist, Transportieren der verabreichten Menge der Prüfflüssigkeit (104) zu einem Detektor (28) der Leckdetektionsvorrichtung und
Detektieren der transportierten Menge der Prüfflüssigkeit (104) mit dem Detektor (28) zur Prüfung dessen Funktionsfähigkeit.

6. Verfahren nach Anspruch 6, **dadurch gekennzeichnet, dass** die Prüfflüssigkeit (104) mit einer Testleckvorrichtung nach einem der Ansprüche 1-5 verabreicht wird.

7. Verfahren nach einem der vorhergehenden Ansprüche, **dadurch gekennzeichnet, dass** pro Fördervorgang eine Fördermenge von weniger als 100 µl und bevorzugt von weniger als 100 nl der Prüfflüssigkeit (104) aus dem Auslass (106) gefördert wird.

8. Verfahren nach einem der vorhergehenden Ansprüche, **dadurch gekennzeichnet, dass** die Prüfflüssigkeit (104) als Sprühnebel aus dem Auslass (106) gefördert wird.

9. Verfahren nach einem der vorhergehenden Ansprüche, **dadurch gekennzeichnet, dass** die Prüfflüssigkeit (104) zusammen mit Restgasbestandteilen aus der Prüfkammer (16) und/oder zusammen mit von einer Wand der Prüfkammer (16) desorbierenden Gasbestandteilen abgesaugt und dem Detektor (28) zugeführt wird, ohne dass der Prüfkammer (16) von außen ein separates Trägergas zugeführt wird.

10. Verfahren nach einem der vorhergehenden Ansprüche, **dadurch gekennzeichnet, dass** der Detektor (28) ein Gasdetektor, wie z.B. ein Massenspektrometer, ein Gaschromatograph, ein Infrarot-Absorptionsdetektor oder ein Detektor mit chemischen oder Halbleitersensoren ist.

11. Verfahren nach einem der vorhergehenden Ansprüche, **dadurch gekennzeichnet, dass** der Detektor (28) in einem Vakuumsystem mit einem geringeren Druck als der Druck innerhalb der Prüfkammer (16) betrieben wird.

12. Verfahren nach einem der vorhergehenden Ansprüche, **dadurch gekennzeichnet, dass** eine Akkumulation der Prüfflüssigkeit (104) in der Prüfkammer (16) oder in der Verbindungsleitung während eines Zeitraumes erfolgt, bevor das Detektieren der Prüfflüssigkeit (104) mit dem Detektor (28) erfolgt.

13. Verfahren nach einem der vorhergehenden Ansprüche, **dadurch gekennzeichnet, dass** die Prüfflüssigkeit (104) dem Detektor (28) erst dann zugeführt wird, wenn ein vorgegebener Druckgrenzwert in der Prüfkammer (16) erreicht ist, wobei der Druckgrenzwert bevorzugt im Bereich zwischen 2-100 mbar liegt oder weniger als 20 mbar beträgt.

## Claims

1. A test leak device for functional testing of a leak detection device for the leak test of a test specimen (14) filled with a liquid (12), wherein the test specimen (14) is a battery having an internal pressure that is lower than atmospheric pressure, **characterized in that** the test leak device comprises:
a reservoir (102) filled with a test liquid (104), wherein the test liquid (104) has a vapor pressure of less than 500 mbar at room temperature, and the reservoir (102) comprises an outlet (106), wherein the liquid (12) is an electrolyte or solvent and/or the test liquid (104) is an electrolyte or solvent, and
a pump (100) cooperating with the reservoir (102) and configured to convey the test liquid (104) from the reservoir (102) in such a way that the test liquid (104) escapes from the pump (100) through the outlet (106) in liquid form from the reservoir (102).

2. The test leak device according to claim 1, **characterized in that** the pump (100) is a micro-metering pump configured to deliver a flow rate of less than 100 µl and preferably less than 100 nl of the test liquid (104) from the outlet (106) per conveying operation.

3. The test leak device according to claim 1 or 2, **characterized in that** the test leak device, the pump (100) and/or the outlet (106) are configured to convey the test liquid (104) from the outlet (106) as spray mist.

4. The test leak device according to any one of the preceding claims, **characterized in that** the pump (100) comprises a piezo liquid metering device for metering the flow rate to be delivered by the pump (100) per conveying operation.

5. A method for functional testing of a leak detection device for the leak test of a test specimen (14) filled with a liquid (12), wherein the test specimen (14) is a battery having an internal pressure that is lower than atmospheric pressure, **characterized in that** the method comprises the following steps:
evacuating a test chamber (16) of the leak detection device to a pressure lower than atmospheric pressure,
delivering a predetermined amount of a test liquid (104), which has a vapor pressure of less than 500 mbar at room temperature, into the test chamber, wherein the liquid (12) is an electrolyte or solvent and/or the test liquid (104) is an electrolyte or solvent,
transporting the delivered amount of test liquid (104) to a detector (28) of the leak detection device, and
detecting the transported amount of test liquid (104) by means of the detector (28) for testing its functionality.

6. The method according to claim 5, **characterized in that** the test liquid (104) is delivered by means of a test leak device according to any one of claims 1-5.

7. The method according to any one of the preceding claims, **characterized in that** a flow rate of less than 100 µl and preferably less than 100 nl of the test liquid (104) is conveyed from the outlet (106) per conveying operation.

8. The method according to any one of the preceding claims, **characterized in that** the test liquid (104) is conveyed from the outlet (106) as spray mist.

9. The method according to any one of the preceding claims, **characterized in that** the test liquid (104) is drawn from the test chamber (16) together with residual gas components and/or together with gas components desorbing from a wall of the test chamber (16) and is supplied to the detector (28) without a separate carrier gas being supplied to the test chamber (16) from the outside.

10. The method according to any one of the preceding claims, **characterized in that** the detector (28) is a gas detector, such as a mass spectrometer, a gas chromatograph, an infrared absorption detector, or a detector with chemical or semiconductor sensors.

11. The method according to any one of the preceding claims, **characterized in that** the detector (28) is operated in a vacuum system with a lower pressure than the pressure within the test chamber (16).

12. The method according to any one of the preceding claims, **characterized in that** the test liquid (104) in the test chamber (16) or in the connecting line is accumulated during a period of time before the test liquid (104) is detected by means of the detector (28).

13. The method according to any one of the preceding claims, **characterized in that** the test liquid (104) is only supplied to the detector (28) if a predetermined pressure limit value is reached in the test chamber (16), wherein the pressure limit value is preferably in the range between 2-100 mbar or is less than 20 mbar.

## Revendications

1. Dispositif de fuite test permettant de vérifier le fonctionnement d'un dispositif de détection de fuite en vue de vérifier l'étanchéité d'un échantillon (14) rempli d'un liquide (12), dans lequel l'échantillon (14) est une batterie présentant une pression interne inférieure à la pression atmosphérique, **caractérisé en ce que** le dispositif de fuite test présente :
un réservoir (102) rempli d'un liquide d'essai (104), le liquide d'essai (104) présentant à température ambiante une pression de vapeur inférieure à 500 mbar, et le réservoir (102) présentant une sortie (106), le liquide (12) étant un électrolyte ou un solvant et/ou le liquide d'essai (104) étant un électrolyte ou un solvant, et
une pompe (100) coopérant avec le réservoir (102) et conçue pour refouler le liquide d'essai (104) hors du réservoir (102) de façon telle que le liquide d'essai (104) sort du réservoir (102) sous forme liquide, depuis la pompe (100) et via la sortie (106).

2. Dispositif de fuite test selon la revendication 1, **caractérisé en ce que** la pompe (100) est une pompe de microdosage conçue pour refouler par la sortie (106) une quantité de refoulement de liquide d'essai (104) inférieure à 100 µl, et de préférence inférieure à 100 nl, à chaque opération de refoulement.

3. Dispositif de fuite test selon la revendication 1 ou 2, **caractérisé en ce que** le dispositif de fuite test, la pompe (100) et/ou la sortie (106) sont conçus pour refouler le liquide d'essai (104) par la sortie (106) sous forme de brouillard de fines gouttelettes.

4. Dispositif de fuite test selon l'une des revendications précédentes, **caractérisé en ce que** la pompe (100) présente un dispositif piézoélectrique de dosage de liquide permettant de doser la quantité refoulée à délivrer par la pompe (100) à chaque opération de refoulement.

5. Procédé de vérification du fonctionnement d'un dispositif de détection de fuite destiné à vérifier l'étanchéité d'un échantillon (14) rempli d'un liquide (12), dans lequel l'échantillon (14) est une batterie présentant une pression interne inférieure à la pression atmosphérique,
**caractérisé en ce que** le procédé comprend les étapes consistant à :
faire le vide dans une chambre d'essai (16) du dispositif de détection de fuite jusqu'à une pression inférieure à la pression atmosphérique ;
délivrer dans la chambre d'essai une quantité prédéfinie d'un liquide d'essai (104) présentant, à la température de la chambre, une pression de vapeur inférieure à 500 mbar, le liquide (12) étant un électrolyte ou un solvant et/ou le liquide d'essai (104) étant un électrolyte ou un solvant,
transporter la quantité délivrée du liquide d'essai (104) vers un détecteur (28) du dispositif de détection de fuite, et
détecter la quantité transportée de liquide d'essai (104) avec le détecteur (28) afin de vérifier sa capacité de fonctionnement.

6. Procédé selon la revendication 5, **caractérisé en ce que** le liquide d'essai (104) est délivré par un dispositif de fuite test selon l'une des revendications 1 à 5.

7. Procédé selon l'une des revendications précédentes, **caractérisé en ce qu'**une quantité de refoulement inférieure à 100 µl, et de préférence inférieure à 100 nl, du liquide d'essai (104) est refoulée par la sortie (106) à chaque opération de refoulement.

8. Procédé selon l'une des revendications précédentes, **caractérisé en ce que** le liquide d'essai (104) est refoulé par la sortie (106) sous forme de brouillard de fines gouttelettes.

9. Procédé selon l'une des revendications précédentes, **caractérisé en ce que** le liquide d'essai (104) est aspiré hors de la chambre d'essai (16) avec des constituants de gaz résiduel et/ou avec des constituants de gaz désorbant d'une paroi de la chambre d'essai (16) et alimente le détecteur (28) sans qu'un gaz porteur séparé soit amené dans la chambre d'essai (16) depuis l'extérieur.

10. Procédé selon l'une des revendications précédentes, **caractérisé en ce que** le détecteur (28) est un détecteur de gaz tel qu'un spectromètre de masse, un chromatographe en phase gazeuse, un détecteur à absorption infrarouge ou un détecteur à capteurs chimiques ou à semi-conducteurs.

11. Procédé selon l'une des revendications précédentes, **caractérisé en ce que** le détecteur (28) fonctionne dans un système de vide avec une pression inférieure à la pression régnant à l'intérieur de la chambre d'essai (16).

12. Procédé selon l'une des revendications précédentes, **caractérisé en ce qu'**une accumulation du liquide d'essai (104) a lieu dans la chambre d'essai (16) ou dans la conduite de raccordement pendant une certaine durée avant que la détection du liquide d'essai (104) par le détecteur (28) se fasse.

13. Procédé selon l'une des revendications précédentes, **caractérisé en ce que** le liquide d'essai (104) n'est amené au détecteur (28) que lorsqu'une valeur limite de pression prédéfinie est atteinte dans la chambre d'essai (16), la valeur limite de pression se situant de préférence dans une plage comprise entre 2 et 100 mbar ou étant inférieure à 20 mbar.
